(19) Europäisches Patentamt

European Patent Office

Office européen des brevets

(11) **EP 0 974 564 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.⁷: **C04B 35/01**, C04B 35/505, H01M 8/12, H01M 8/24

(21) Anmeldenummer: **99810575.3**

(22) Anmeldetag: **02.07.1999**

(54) **Perowskit für eine Beschichtung von Interkonnektoren**

Perovskites for coating interconnectors

Perovskites pour le revêtement d'un interconnecteur

(84) Benannte Vertragsstaaten:
**AT BE CH CY DE DK ES FI FR GB GR IE IT LI LU MC NL PT SE**

(30) Priorität: **24.07.1998 EP 98810716**

(43) Veröffentlichungstag der Anmeldung:
**26.01.2000 Patentblatt 2000/04**

(73) Patentinhaber: **Sulzer Hexis AG**
**8400 Winterthur (CH)**

(72) Erfinder:
• **Batawi, Emad, Dr.**
**8400 Winterthur (CH)**
• **Plas, Alessio**
**8006 Zürich (CH)**

(74) Vertreter: **Sulzer Management AG**
**KS/Patente/0007,**
**Zürcherstrasse 12**
**8401 Winterthur (CH)**

(56) Entgegenhaltungen:
EP-A- 0 338 823     EP-A- 0 714 147
EP-A- 0 722 193     DE-A- 19 630 991
US-A- 5 411 767

• DATABASE CHEMABS [Online] CHEMICAL ABSTRACTS SERVICE, COLUMBUS, OHIO, US SUNSTROM, JOSEPH E., IV ET AL: "The synthesis and properties of the chemically oxidized perovskite, La1-xSrxCoO3-.delta. (0.5 <= x <= 0.9)" XP002087836 & J. SOLID STATE CHEM. (1998), 139(2), 388-397 CODEN: JSSCBI;ISSN: 0022-4596,

• DATABASE CHEMABS [Online] CHEMICAL ABSTRACTS SERVICE, COLUMBUS, OHIO, US KHARTON, V. V. ET AL: "Development of mixed conductive materials for high-temperature electrochemical oxygen membranes" XP002087837 & HIGH TEMP. ELECTROCHEM.: CERAM. MET., PROC. RISOE INT. SYMP. MATER. SCI., 17TH (1996), 301-306. EDITOR(S): POULSEN, F. W. PUBLISHER: RISOE NATIONAL LABORATORY, ROSKILDE, DEN. CODEN: 63PAA2,

• DATABASE CHEMABS [Online] CHEMICAL ABSTRACTS SERVICE, COLUMBUS, OHIO, US TAKEDA, Y. ET AL: "Cathodic polarization phenomena of perovskite oxide electrodes with stabilized zirconia" XP002087838 & J. ELECTROCHEM. SOC. (1987), 134(11), 2656-61 CODEN: JESOAN;ISSN: 0013-4651,

• PATENT ABSTRACTS OF JAPAN vol. 013, no. 343 (E-796), 2. August 1989 (1989-08-02) & JP 01 100866 A (TOA NENRYO KOGYO KK), 19. April 1989 (1989-04-19)

• DE SOUZA R A ET AL: "Oxygen transport in La1-xSrxMn1-yCoyO3+-delta perovskites - Part I. Oxygen tracer diffusion" SOLID STATE IONICS, Bd. 106, Nr. 3-4, 1. Februar 1998 (1998-02-01), Seite 175-187 XP004111872

**Beschreibung**

Die Erfindung betrifft einen Perowskit für eine Beschichtung von Interkonnektoren, die für einen Einsatz in Hochtemperaturbrennstoffzellen vorgesehen sind. Sie bezieht sich auch auf Interkonnektoren und Batterien von Hochtemperaturbrennstoffzellen.

Brennstoffzellenbatterien mit stapelartig angeordneten Zellen enthalten zwischen elektrochemisch aktive Platten eingelegte Verbindungselemente, nämlich Interkonnektoren, durch die Elektroden benachbarter Zellen elektrisch leitend verbunden sind. Solche Interkonnektoren müssen Beschichtungen aufweisen, die elektrisch leitend sowie für Chromoxid undurchlässig sind. Eine Beschichtung mit einem bekannten Perowskit, nämlich LSM, wird mit einem HVOF-Verfahren (High Velocity Oxy-Fuel) bis zu Dicken von 150 μm auf die Oberflächen der Interkonnektoren thermisch aufgespritzt. Bei den hohen Temperaturen von rund 900°C, die für den Betrieb von Hochtemperaturbrennstoffzellen nötig sind, altern Zellen mit unbeschichteten Interkonnektoren sehr schnell, so dass sie bereits nach 400 Stunden keine brauchbare elektrische Leistung mehr abgeben. Durch die Beschichtung wird eine Chromoxidabgabe unterdrückt, wodurch sich die Lebensdauer bis auf mindestens 15000 Stunden verlängert. Eine Degradation der elektrochemisch aktiven Platten reduziert sich auf weniger als 1% während einer Betriebsdauer von 1000 Stunden.

Beim HVOF-Verfahren wird das zu beschichtende Material, der erwähnte Perowskit LSM, in Form von auf hohe Geschwindigkeiten (Überschall) beschleunigte Partikel aufgespritzt, wobei deren Temperatur während des Aufspritzens auf einen Wert erhöht wird, der in der Nähe des Schmelzpunkts von LSM liegt. Eine noch höhere Temperatur, wie dies bei einem Vakuumplasma-Spritzverfahren der Fall wäre, wird vermieden, um eine chemische Entmischung des Perowskits weitgehend verhindern zu können. Eine Entmischung würde die Eigenschaften der Beschichtung bezüglich elektrischer Leitfähigkeit sowie Unterdrückung eines Chromoxidtransports verschlechtern. Mit dem HVOF-Verfahren lassen sich Schichten herstellen, deren Porosität kleiner als 25% ist. Bei dem maximalen Wert der Porosität ergibt sich ein ausreichender Schutz gegen eine Abgabe von Chromoxid, wenn die Schicht 150 μm dick ist.

Damit die Perowskit-Beschichtung weitgehend homogen ist, müssen die Parameter des HVOF-Verfahrens so eingestellt werden, dass keine Entmischungen auftreten. Die Energie, die die Pulverteilchen beim Aufspritzen aufnehmen, soll zu einem möglichst grossen Anteil kinetische Energie sein. Die Temperatur und damit die Wärmeenergie soll möglichst klein sein. Mit einer grossen kinetischen Energie ist auch die Dauer, während der die Pulverteilchen einer erhöhten Temperatur ausgesetzt sind, geringer, so dass das Ausmass einer Entmischung des Perowskits ebenfalls geringer ist. Ferner soll die Beschichtung möglichst dicht sein. Je dichter sie ist, desto grösser ist die elektrische Leitfähigkeit und desto geringer kann die Schichtdicke gewählt werden, was beides bezüglich einem Ohmschen Widerstand der Beschichtung, der möglichst klein sein soll, von Vorteil ist.

Perowskite lassen sich durch die Formel $ABO_3$ beschreiben, wobei A und B zwei neben Sauerstoff O vorliegende Anteile bedeuten. Für LSM ist der A-Anteil $La_{0.8}Sr_{0.2}$ und der B-Anteil Mn. Lanthanide, insbesondere Lanthan La, sind teure Stoffe, so dass der LSM wegen des in ihm enthaltenen La deutlich bemerkbar zu den Gesamtkosten der Brennstoffzellen beiträgt. Um mit Brennstoffzellen eine konkurrenzfähige Stromquelle anbieten zu können, müssen deren Herstellkosten massiv verringert werden. Man steht daher vor der Frage, ob es alternative Materialien gibt, die hinsichtlich einer Interkonnektorbeschichtung die gleichen funktionellen Eigenschaften wie LSM aufweisen, die aber wesentlich weniger kosten.

Aufgabe der Erfindung ist es, ein Material für eine kostengünstige Beschichtung von Interkonnektoren zu finden, das weitgehend gleich wirksam wie LSM ist. Diese Aufgabe wird durch die in Anspruch 1 definierte Perowskite $ABO_{3-\varepsilon}$ gelöst, wobei insbesondere der A-Anteil weniger als 50 Atomprozent (w < 0,5) eines Lanthanids umfasst.

Der Perowskit ist für eine Beschichtung von Interkonnektoren, die in Hochtemperaturbrennstoffzellen eingesetzt werden, vorgesehen. Seine Zusammensetzung lässt sich durch die Formel $ABO_{3-\varepsilon}$, mit A = ($E_{1-w}$ $Ln_{w-\delta}$) und B = ($G_{1-z}J_z$), beschreiben. Dabei gilt folgendes: E ist das Erdalkalimetall Ca; Ln ist das Lanthanid Y; G ist ein Übergangsmetall, vorzugsweise Mn; J ist ein zweites Übergangsmetall, vorzugsweise Co; w ist eine Zahl, die grösser als 0,1 und kleiner als 0,5, vorzugsweise gleich 0,2 ist; $\delta$ ist eine positve oder negative Zahl, deren absoluter Betrag kleiner als rund 0.02 ist; z ist gleich Null oder eine Zahl, die grösser als 0,01 und kleiner als 0,5, vorzugsweise gleich 0.2 ist und $\varepsilon$ ist eine positve oder negative Zahl, deren absoluter Betrag kleiner als rund 0.5 ist.

Für die entsprechende Formel $ABO_{3-\varepsilon}$ von LSM gilt zum Vergleich mit den erfindungsgemässen Perowskiten: w = 0,8, $\delta$ = 0, Ln = La, E = Sr, z = 0, G = Mn und $\varepsilon$ = 0.

Während bei dem bekannten Perowskit LSM Entmischungsphänomene nur mittels des HVOF-Verfahrens vermeidbar sind, können bei den Beschichtungen mit lanthanidarmen Perowskiten auch andere thermische Spritzverfahren, beispielsweise Plasmaspritzen, angewendet werden. Denn durch die Reduktion des Lanthanidanteils reduziert sich auch die Tendenz zur Ausbildung von Entmischungen.

Anspruch 2 betrifft besonders vorteilhafte Perowskite, die hinsichtlich Wärmeausdehnung und elektrischer Leitfähigkeit ausgewählt worden sind.

Die Ansprüche 3 bis 6 beziehen sich auf Interkonnektoren, die mit Perowskiten der erfindungsgemässen Zusammensetzung beschichtet sind. Gegenstand des Anspruchs 7 ist eine Brennstoffzellenbatterie mit solchen Interkonnektoren.

Nachfolgend wird die Erfindung anhand der Zeichnungen erläutert. Es zeigen:

Fig. 1 einen Querschnitt durch eine zur Hälfte dargestellte Brennstoffzelle,

Fig. 2 ein Diagramm zur spezifischen Leitfähigkeit von drei Perowskiten in Abhängigkeit von der Temperatur,

Fig. 3 ein zweites Diagramm zu spezifischen Widerständen und

Fig. 4 ein drittes Diagramm zu Wärmeausdehungskoeffizienten.

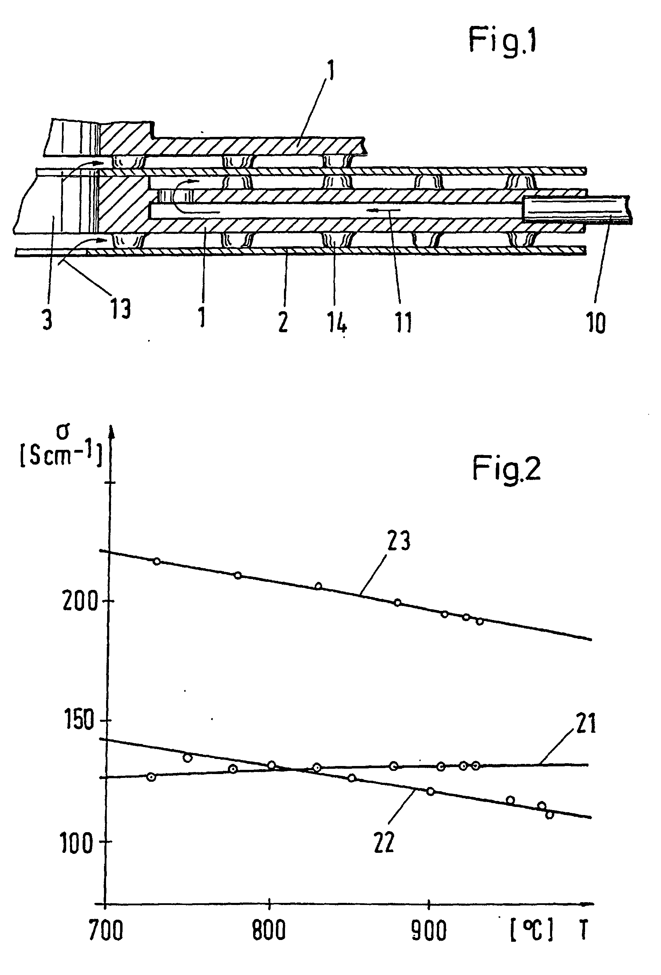

In der Fig. 1 ist eine zentralsymmetrische Zelle einer stapelförmigen Brennstoffzellenbatterie ausschnittsweise dargestellt, wie sie beispielsweise aus der EP-A 0 714 147 (= P.6651) bekannt ist. In dieser Veröffentlichung wird näher auf die Problematik bezüglich dem in den Interkonnektoren enthaltenen Chrom eingegangen.

Die Brennstoffzelle umfasst ein als Wärmetauscher ausgebildetes Verbindungselement, einen Interkonnektor 1, in dem durch ein Einspeiserohr 10 zugeführte Luft 11 vorgewärmt wird. Zwischen den Interkonnektoren 1 benachbarter Zellen ist jeweils eine elektrochemisch aktive Platte 2 angeordnet, die sich - nicht dargestellt - aus einer Luftelektrode oder Kathode, einer Gaselektrode oder Anode und einem Feststoffelektrolyten aufbaut. Brenngas 13 wird über einen zentralen Kanal 3 in die einzelnen Zellen verteilt. Noppenförmige Erhebungen 14 stellen elektrische Verbindungen von den Interkonnektoren 1 zu den Elektroden her.

Die Interkonnektoren 1 werden aus einer Legierung hergestellt, die hauptsächlich aus Chrom besteht und die weitgehend eine gleich grosse Wärmeausdehnung hat wie die elektrochemisch aktive Platte 2. Die äussere Oberfläche des aus dieser Legierung gefertigten Grundkörpers des Interkonnektors wird mit einem Perowskit beschichtet; die innere Oberfläche, die auch beschichtet sein muss, kann emailliert werden.

Bei der Wahl eines Perowskits muss einerseits darauf geachtet werden, dass dieser einen ähnlichen Wärmeausdehnungskoeffizienten hat wie die Legierung des Grundkörpers, damit die Beschichtung gut auf dem Grundkörper haftet. Andererseits muss die spezifische Leitfähigkeit der Beschichtung möglichst gross bzw. der spezifische Widerstand möglichst klein sein, damit sich für die Brennstoffzellenbatterie ein guter Wirkungsgrad ergibt.

Die Diagramme der Figuren 2 bis 4 beziehen sich auf diese beiden, für die Wahl des Perowskits massgebenden Grössen. In Fig. 2 lässt sich die spezifische Leitfähigkeit von zwei Perowskitbeschichtungen, Messkurven 22 und 23, mit jener der bekannten LSM-Beschichtung, Messkurve 21, vergleichen. Die Kurve 22 ist für SLM (= $La_{0.2} Sr_{0.8} MnO_3$) und die Kurve 23 für CLM (= $La_{0.2} Ca_{0.8} MnO_3$) in Abhängigkeit von der Temperatur T gemessen worden. Es sind die gemessenen Werte als Punkte markiert. Diese Werte hängen von einem weiteren Parameter ab, der Porosität, für die folgende Werte bestimmt worden sind: Für CLM 1%, für LSM 3% und für SLM 40%. Es ist zu erwarten, dass sich durch eine Reduktion der Porosität von SLM eine ähnliche gute, d. h. hohe Leitfähigkeit wie für CLM ergibt, die sogar besser als jene von LSM ist.

Wie man anhand der Fig.2 bezüglich der Leittfähigkeit erkennen kann, lässt sich La tatsächlich mit Erfolg zu einem grossen Teil durch Sr oder Ca substituieren. Wie weitere, nicht dargestellte Messungen ergeben haben, ist auch das Wärmeausdehnungsverhalten dieser Perowskite ähnlich wie jenes des zu beschichtenden Grundkörpers.

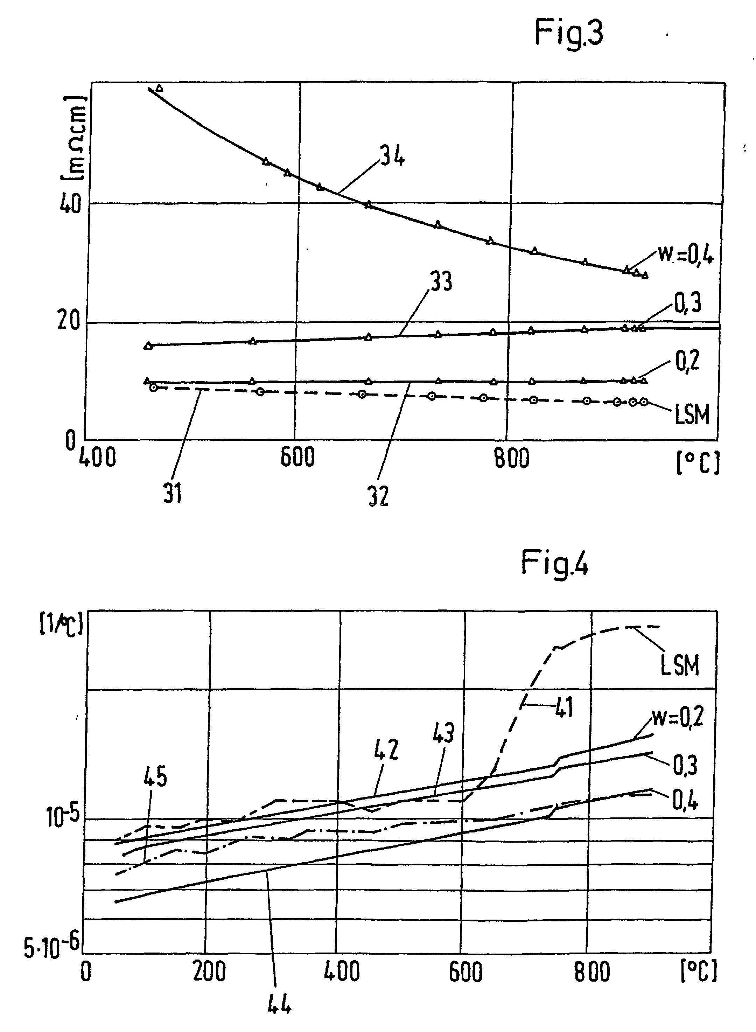

Es ist bekannt, dass auch weitere Bestandteile der Perowskite substituiert und variiert werden können, ohne dass sich wesentliche Änderungen der chemischen und physikalischen Eigenschaften ergeben. Es ist daher für die Beschichtung von Interkonnektoren eine ganze Klasse von Perowskiten nutzbar, die durch die in Anspruch 1 angegebene Formel definiert ist. Als besonders vorteilhaft haben sich die Perowskite der Formel $Ca_{1-w}Y_w MnO_3$, mit $0.1 < w < 0.25$, erwiesen: siehe nachfolgend die Figuren 3 und 4. In diesen CYM-Perowskiten $Ca_{1-w}Y_wMnO_3$ ist das La von LSM vollständig substituiert, nämlich zu einem grossen Teil durch das Erdalkalimetall Ca und zu einem kleineren durch das Lanthanid Y.

In Fig. 3 sind Messungen der spezifischen Widerstände (Einheit: mOhm cm) von LSM, gestrichelt gezeichnete Kurve 31, und von den CYM-Perowskiten, Kurven 32 bis 34, mit $w = 0.2$, $0.3$ bzw. $0.4$ dargestellt. Die Porositäten unterscheiden sich: für LSM (Kurve 31) 3% sowie für die CYM-Perowskite 14% für $w = 0.2$ (Kurve 32), 9% für $w = 0.3$ (Kurve 33) und 5% für $w = 0.4$ (Kurve 34). Fig. 4 zeigt für die gleichen Perowskite die Wärmeausdehnungskoeffizienten (Einheit 1/°C): die gestrichelt gezeichnete Kurve 41 gibt den Messwerteverlauf für LSM an und die Kurven 42 bis 44 für die CYM-Perowskite, mit $w = 0.2$, $0.3$ bzw. $0.4$. Es ist zusätzlich mit der strichpunktierten Kurve 45 der Wärmeausdehnungskoeffizient der Legierung des Interkonnektorgrundkörpers angegeben.

Wie man aus den Figuren 3 und 4 ableiten kann, ist für die CYM-Perowskite ein Wert von w zu wählen, der bezüglich dem elektrischen Widerstand eher klein und bezüglich dem Wärmeausdehnungskoeffizienten eher gross ist. Mit Vorteil wählt man daher einen Wert, der im genannten Intervall $0.1 < w < 0.25$ liegt. Hinsichtlich dem Widerstand ergibt sich eine geringe Verschlechterung gegenüber LSM. Hingegegen sind die CYM-Perowskite bezüglich dem Wärmeausdehnungsverhalten geeigneter, da sie nicht wie LSM eine Phasenumwandlung - siehe den starken Anstieg der Kurve 41 im Bereich von 700°C - aufweisen.

Die erfindungsgemässen Perowskite weisen im Vergleich mit LSM einen weiteren Vorteil auf. Lanthan ist in Form von $La_2O_3$ hydrophil. LSM enthält aufgrund von Entmischungen dieses Oxid; es kann daher Wasser aus der Umgebung aufnehmen und dabei Hydroxide bilden, was zur Folge haben kann, dass sich die Beschichtung vom Grundkörper ablöst. Bei den Erdalkalimetallen Ca und Sr sowie dem Lanthanid Y, durch die sich das La teilweise oder gesamthaft substituieren lässt, tritt dieses Problem nicht auf.

Dieser Vorteil ist auch bezüglich der Wahl eines Beschichtungsverfahrens wichtig. Wärend für LSM das genannte HVOF-Verfahren anzuwenden ist, um die Ausbildung von $La_2O_3$ weitgehend vermeiden zu können, kommen nun für die erfindungsgemässen Perowskite, in denen das La substituiert ist, auch andere thermische Spritzverfahren in Frage, die weniger aufwendig sind.

Aus der EP-A 0 722 193 (= P.6658) ist ein elektrochemisch aktives Element bekannt, das auf einer Trägerplatte mit zellulärer, offenporiger Struktur aufgebracht ist. Der erfindungsgemässe Perowskit kann auch zur Herstellung einer solchen Trägerplatte verwendet werden. Es ist auch möglich, die Interkonnektoren gesamthaft aus dem erfindungsgemässen Perowskit zu fertigen. Da die Interkonnektoren als Wärmetauscher für die in die Brennstoffzellen eingespeiste Luft ausgebildet sind, wäre allerdings das gegenüber den üblicherweise verwendeten Metallen geringere Wärmeleitvermögen des Perowskits nachteilig.

**Patentansprüche**

1.  Perowskit für eine Beschichtung von Interkonnektoren, die in Hochtemperaturbrennstoffzellen eingesetzt werden, wobei der Perowskit - weitgehend frei von einer chemischen Entmischung - durch die Formel

    $$ABO_{3-\epsilon}, \text{ mit } A = (Ca_{1-w}Y_{w-\delta}) \text{ und } B = (G_{1-z}J_z)$$

    gegeben ist und folgendes gilt:

    G ist ein Übergangsmetall mit Ausnahme von Co, vorzugsweise Mn,
    J ist ein zweites Übergangsmetall, vorzugsweise Co,
    w ist eine Zahl, die grösser als 0.1 und kleiner als 0.5, vorzugsweise gleich 0.2 ist,
    δ ist eine positive oder negative Zahl, deren absoluter Betrag kleiner als rund 0.02 ist,
    z ist eine Zahl, die gleich Null oder grösser als 0.01 und kleiner als 0.5 ist, und
ε ist eine positive oder negative Zahl, deren absoluter Betrag kleiner als rund 0.5 ist.

2.  Perowskit nach Anspruch 1, **gekennzeichnet durch** die Formel

    $$Ca_{1-w}Y_w MnO_3 \text{ mit } 0.1 < w < 0.25.$$

3.  Beschichteter Interkonnektor für Hochtemperaturbrennstoffzellen, dessen Beschichtung ein Perowskit $ABO_{3-\epsilon}$ gemäss der in Anspruch 1 definierten Formel ist, der in Form eines Pulvers und mittels eines HVOF-Verfahrens oder eines anderen thermischen Spritzverfahrens auf die Oberflächen der Interkonnektoren aufgespritzt wird, wobei während des Aufspritzens die Temperatur des Pulvers unter einem relativ niedrigen Wert bleibt, für den im Perowskit praktisch keine chemische Entmischung entsteht.

4.  Interkonnektor nach Anspruch 3, **gekennzeichnet durch** eine Beschichtung, deren Porosität kleiner als 40% und deren Schichtdicke kleiner als 0.2 mm ist.

5.  Interkonnektor nach Anspruch 4, **gekennzeichnet durch** eine Beschichtung, deren Porosität kleiner als 10%, vorzugsweise kleiner als 3% ist, und deren Schichtdicke kleiner als 0.15 mm ist.

6.  Interkonnektor nach einem der Ansprüche 3 bis 5, **dadurch gekennzeichnet, dass** die Wärmeausdehnungskoeffizienten des Perowskits der Beschichtung und des Interkonnektormaterials weitgehend gleich gross sind.

7.  Brennstoffzellenbatterien mit Interkonnektoren gemäss einem der Ansprüche 3 bis 5, **dadurch gekennzeichnet, dass** die Interkonnektoren zwischen elektrochemisch aktiven Platten eines Zellstapels angeordneten sind, wobei durch ein Interkonnektor jeweils Elektroden von elektrochemisch aktiven Platten benachbarter Zellen elektrisch leitend verbunden sind und deren Interkonnektorbeschichtung einen spezifischen elektrischen Widerstand hat, der höchstens rund 20 mOhm cm beträgt.

8.  Verwendung eines Perowskits für eine Beschichtung von Interkonnektoren, die in Hochtemperaturbrennstoffzellen eingesetzt werden, wobei der Perowskit - weitgehend frei von einer chemischen Entmischung - durch die Formel

    $$ABO_{3-\epsilon}, \text{ mit } A = (Ca_{1-w}Ln_{w-\delta}) \text{ und } B = (G_{1-z}J_z)$$

gegeben ist und folgendes gilt:

> Ln ist ein Lanthanid, vorzugsweise La oder Y,
> G ist ein Übergangsmetall mit Ausnahme von Co, vorzugsweise Mn,
> J ist ein zweites Übergangsmetall, vorzugsweise Co,
> w ist eine Zahl, die grösser als 0.1 und kleiner als 0.5, vorzugsweise gleich 0.2 ist,
> $\delta$ ist eine positive oder negative Zahl, deren absoluter Betrag kleiner als rund 0.02 ist,
> z ist eine Zahl, die grösser als 0.0 und kleiner als 0.5 ist, und
> $\varepsilon$ ist eine positive oder negative Zahl, deren absoluter Betrag kleiner als rund 0.5 ist.

**9.** Verwendung eines Perowskits nach Anspruch 8, **dadurch gekennzeichnet, dass** der Perowskit durch die Formel

$$Ca_{1-w}Y_wMnO_3 \text{ mit } 0.1 < w < 0.25$$

gegeben ist.

**Claims**

**1.** Perowskite for a coating of interconnectors which are used in high temperature fuel cells, wherein the perowskite - largely free of a chemical segregation - is given by the formula

$$ABO_{3-\varepsilon}, \text{ with } A = (Ca_{1-w} \ Y_{w-\delta}) \text{ and } B = (G_{1-z} \ J_z)$$

in which the following holds:

> G is a transition metal with the exception of Co, preferably Mn,
> J is a second transition metal, preferably Co,
> w is a number which is greater than 0.1 and less than 0.5, preferably equal to 0.2,
> $\delta$ is a positive or negative number, the absolute value of which is less than about 0.02,
> z is a number which is equal to zero or greater than 0.01 and less than 0.5, preferably equal to 0.2 and
> $\varepsilon$ is a positive or negative number, the absolute value of which is less than about 0.5.

**2.** Perowskite in accordance with claim 1 **characterised by** the formula

$$Ca_{1-w} \ Y_w \ MnO_3; \text{ with } 0.1 < w < 0.25.$$

**3.** Coated interconnector for high temperature fuel cells, the coating of which is a Perowskite $ABO_{3-\varepsilon}$ in accordance with the formula defined in claim 1 which is sprayed in the form of a powder and using a HVOF procedure or another thermal spraying procedure onto the surfaces of the interconnectors, with the temperature of the powder remaining below a relatively low value during the spraying on for which practically no chemical segregation arises in the Perowskite.

**4.** Interconnector in accordance with claim 3 **characterised by** a coating, of which the porosity is less than 40% and of which the layer thickness is less than 0.2 mm.

**5.** Interconnector in accordance with claim 4 **characterised by** a coating, of which the porosity is less than 10%, preferably less than 3%, and of which the layer thickness is less than 0.15 mm.

**6.** Interconnector in accordance with one of the claims 3 to 5 **characterised in that** the thermal expansion coefficients of the Perowskite of the coating and of the interconnector material are largely equal.

**7.** Fuel cell batteries with interconnectors in accordance with one of the claims 3 to 5 **characterised in that** the interconnectors are arranged between electrochemically active plates of a cell stack, with electrodes of electrochemically active plates of adjacent cells in each case being connected in an electrically conducting manner by an interconnector and with their interconnector coating having a specific electrical resistance which amounts at most to about 20 mOhm cm.

**8.** Use of a perowskite for a coating of interconnectors which are used in high temperature fuel cells, wherein the perowskite - largely free of a chemical segregation - is given by the formula

$$ABO_{3-\varepsilon}, \text{ with } A = (Ca_{1-w} \ Ln_{w-\delta}) \text{ and } B = (G_{1-z} \ J_z)$$

in which the following holds:

> Ln is a lanthanide, preferably La or Y,
> G is a transition metal with the exception of Co, preferably Mn,
> J is a second transition metal, preferably Co,
> w is a number which is greater than 0.1 and less than 0.5, preferably equal to 0.2,
> $\delta$ is a positive or negative number, the absolute value of which is less than about 0.02,
> z is a number which is equal to zero or greater than 0.01 and less than 0.5, preferably equal to 0.2 and
> $\varepsilon$ is a positive or negative number, the absolute value of which is less than about 0.5.

**9.** Use of a perowskite in accordance with claim 8, **characterised in that** the perowskite is given by the formula

$$Ca_{1-w} Y_w MnO_3; \text{ with } 0.1 < w < 0.25.$$

**Revendications**

**1.** Perovskite pour un revêtement d'interconnecteurs qui sont utilisés dans des piles à combustible à haute température, où la perovskite - sensiblement exempte d'une démixtion chimique - est donnée par la formule

$$ABO_{3-\varepsilon,} \text{ avec } A = (Ca_{1-w} Y_{w-\delta}) \text{ et } B = (G_{1-z} J_z)$$

et où :

G est un métal de transition à l'exception de Co, de préférence du Mn,
J est un deuxième métal de transition, de préférence du Co, w est un nombre qui est plus grand que 0,1 et plus petit que 0,5, et qui est de préférence égal à 0,2,
$\delta$ est un nombre positif ou négatif dont la valeur absolue est plus petite qu'environ 0,02,
z est un nombre qui est égal à zéro ou plus grand que 0,01 et plus petit que 0,5 et
$\varepsilon$ est un nombre positif ou négatif dont la valeur absolue est plus petite qu'environ 0,5.

**2.** Perovskite selon la revendication 1, **caractérisée par** la formule

$$Ca_{1-w} Y_w MnO_3 \text{ avec } 0,1 < w < 0,25.$$

**3.** Interconnecteur revêtu pour des piles à combustible à haute température dont le revêtement est une perovskite $ABO_{3-\varepsilon}$ selon la formule définie dans la revendication 1, qui est projetée sous la forme d'une poudre et au moyen d'un procédé HVOF ou d'un autre procédé de projection thermique sur les surfaces des interconnecteurs, où pendant la projection, la température de la poudre reste en dessous d'une valeur relativement basse à laquelle, dans la perovskite, il n'y a pratiquement pas de démixtion chimique.

**4.** Interconnecteur selon la revendication 3, **caractérisé par** un revêtement dont la porosité est plus petite que 40% et dont l'épaisseur de couche est plus petite que 0,2 mm.

**5.** Interconnecteur selon la revendication 4, **caractérisé par** un revêtement, dont la porosité est plus petite que 10%, de préférence plus petite que 3%, et dont l'épaisseur de couche est plus petite que 0,15 mm.

**6.** Interconnecteur selon l'une des revendications 3 à 5, **caractérisé en ce que** les coefficients de dilatation thermique de la perovskite du revêtement et du matériau des interconnecteurs sont sensiblement de la même grandeur.

**7.** Batteries à piles à combustible avec des interconnecteurs selon l'une des revendications 3 à 5, **caractérisée en ce que** les interconnecteurs sont disposés entre des plaques électrochimiquement actives d'une pile de cellules, où par un interconnecteur, respectivement des électrodes de plaques électrochimiquement actives de cellules avoisinantes sont reliées d'une manière électriquement conductrice, et leur revêtement d'interconnecteurs a une résistance électrique spécifique qui est au maximum environ 20 mOhm cm.

**8.** Utilisation d'une perovskite pour un revêtement d'interconnecteurs qui sont placés dans des piles à combustible à haute température, où la perovskite - sensiblement exempte d'une démixtion chimique - est donnée par la formule

$$ABO_{3-\varepsilon} \text{ avec } A = (Ca_{1-w}Ln_{w-\delta}) \text{ et } B = (G_{1-z}Jz)$$

et où

Ln est un lanthanide, de préférence du La ou Y,
G est un métal de transition à l'exception de Co, de préférence du Mn,
J est un deuxième métal de transition, de préférence du Co, w est un nombre qui est plus grand que 0,1 et plus petit que 0,5, qui est de préférence égal à 0,2,
$\delta$ est un nombre positif ou négatif dont la valeur absolue est plus petite qu'environ 0,02,
z est un nombre qui est plus grand que 0,0 et plus petit que 0,5 et
$\varepsilon$ est un nombre positif ou négatif dont la valeur absolue est plus petite qu'environ 0,5.

**9.** Utilisation d'une perovskite selon la revendication 8, **caractérisée en ce que** la perovskite est donnée par la formule

$$Ca_{1-w}Y_wMnO_3 \text{ avec } 0,1 < w < 0,25.$$

# Fig.1

# Fig.2

## Fig.3

## Fig.4